(19) Europäisches Patentamt
European Patent Office
Office européen des brevets

(11) **EP 3 794 309 B1**

(12) **EUROPÄISCHE PATENTSCHRIFT**

(45) Veröffentlichungstag und Bekanntmachung des Hinweises auf die Patenterteilung:
**24.05.2023 Patentblatt 2023/21**

(21) Anmeldenummer: **19729173.5**

(22) Anmeldetag: **06.05.2019**

(51) Internationale Patentklassifikation (IPC):
**G01B 11/16** (2006.01)     **G01B 9/02** (2022.01)

(52) Gemeinsame Patentklassifikation (CPC):
**G01B 11/161; G01B 9/02095**

(86) Internationale Anmeldenummer:
**PCT/DE2019/200038**

(87) Internationale Veröffentlichungsnummer:
**WO 2019/219133 (21.11.2019 Gazette 2019/47)**

(54) **KONTAKTLOSER OPTISCHER DEHNUNGSSENSOR**

CONTACTLESS OPTICAL EXTENSOMETER

CAPTEUR OPTIQUE DE CONTRAINTE SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2018 DE 102018111921**

(43) Veröffentlichungstag der Anmeldung:
**24.03.2021 Patentblatt 2021/12**

(73) Patentinhaber: **Technische Universität Clausthal 38678 Clausthal-Zellerfeld (DE)**

(72) Erfinder:
• WANG, Fangjian
  38678 Clausthal-Zellerfeld (DE)
• REMBE, Christian
  38678 Clausthal-Zellerfeld (DE)
• KOWARSCH, Robert
  38678 Clausthal-Zellerfeld (DE)

(74) Vertreter: **Weidner Stern Jeschke Arnstädter Straße 50 99096 Erfurt (DE)**

(56) Entgegenhaltungen:
WO-A1-2017/015424

• Stefan Radel ET AL: "In-Plane Laser-Doppler-Velocimeter Sensor Head for the Measurement of Surface Structural Intensity Implementing USW fields to PAT Technology View project viability of yeast in USW View project In-Plane Laser-Doppler-Velocimeter Sensor Head for the Measurement of Surface Structural Intensity", , 1. Januar 1998 (1998-01-01), Seiten 1055-1065, XP055604639, Gefunden im Internet: URL:https://www.researchgate.net/profile/Stefan_Radel/publication/233562077_In-Plane_Laser-Doppler-Velocimeter_Sensor_Head_for_the_Measurement_of_Surface_Structural_Intensity/links/0912f51096c2615595000000/In-Plane-Laser-Doppler-Velocimeter-Sensor-Head-for-the-Measurement-of-Surface-Structural-Intensity
• MARU K ET AL: "Nonmechanical compact probe for cross-sectional velocity measurement based on differential laser Doppler velocimetry", REVIEW OF SCIENTIFIC INSTRUMENTS, AIP, MELVILLE, NY, US, Bd. 88, Nr. 4, 4. April 2017 (2017-04-04), XP012217720, ISSN: 0034-6748, DOI: 10.1063/1.4979563 [gefunden am 2017-04-04]
• ADAM TOMASZ WAZ ET AL: "Multichannel WDM vibrometry at 1550 nm", PHOTONICS LETTERS OF POLAND, Bd. 6, Nr. 4, 31. Dezember 2014 (2014-12-31), XP055604580, DOI: 10.4302/plp.2014.4.07

**Beschreibung**

Die vorliegende Erfindung betrifft einen kontaktlosen optischen Dehnungssensor.

Stand der Technik

Die europäische Patentschrift EP 0 851 210 B1 offenbart eine berührungslose Dehnungsmessapparatur, welche ein erstes Laser-Doppler-Messgerät und ein zweites Laser-Doppler-Messgerät aufweist. Das erste und das zweite Laser-Doppler-Messgerät weisen jeweils eine Laserstrahlquelle und einen Detektor zum Messen der Geschwindigkeit oder der Verschiebung in einer vorbestimmten Richtung eines vorbestimmten Messpunkts auf einem Messobjekt auf.

Christian Rembe u. a. (Measuring MEMS in motion by laser doppler vibrometry. In: Optical inspection of microsystems. Boca Raton: taylor & Francis, 2007. S245-292.) beschreiben Produktionstechniken für mikroelektromechanische Systeme (MEMS), welche die Entwicklung zuverlässiger MEMS-Produkte in vielen verschiedenen Anwendungen ermöglicht haben.

C. Exner u. a. (In-Plane Laser-Doppler-Velocimeter Sensor Head for the Measurement of Surface Structural Intensity, Acta Acustica united with Acustica 84(6) :1055-1065 · November 1998) generalisierten die bisherige Theorie über den akustischen Poynting-Vektor in der freien Oberfläche einer Struktur, die bisher nur für den Fall isotroper Strukturen etabliert wurde, auf nicht-isotrope Strukturen. Es wurde gezeigt, dass in diesem allgemeinen Fall die Messung des akustischen Poynting-Vektors in der Oberfläche auf eine Messung der drei Dehnungen in der Ebene und der beiden Geschwindigkeitskomponenten in der Ebene reduziert werden kann. Basierend auf dieser Formulierung wurde ein Sensorkopfkonzept zur Bestimmung des akustischen Poynting-Vektors mittels optischer Mehrpunktverschiebungsmessung in der Ebene vorgestellt.

Ju-Yi Lee u. a. (Measurement of in-plane displacement by wavelength-modulated heterodyne speckle interferometry, Applied Optics, Vol. 51, Issue 8, pp. 1095-1100, 2012) demonstrierten die Verwendung von wellenlängenmoduliertem Licht, das in ein Interferometer mit optischer Wegdifferenz integriert ist, als Heterodyntechnik zur Messung der Verschiebung eines rauen Objekts in der Ebene. Die Verschiebung in der Ebene kann aus der gemessenen Phasenänderung des Heterodyn-Speckle-Signals bestimmt werden.

Die DE10 2012 211 549 B3 betrifft eine Vorrichtung zur interferometrischen Vermessung eines Objekts, umfassend eine Strahlungsquelle zur Erzeugung eines Ausgangsstrahls, eine Strahlteilervorrichtung zur Aufteilung des Ausgangsstrahls in einen Mess- und einen Referenzstrahl, eine optische Überlagerungsvorrichtung und einen ersten Detektor, wobei Überlagerungsvorrichtung und erster Detektor derart zusammenwirkend ausgestaltet sind, dass der von dem Objekt zumindest teilweise reflektierte Messstrahl als Empfangsstrahl und der Referenzstrahl auf mindestens einer Detektorfläche des ersten Detektors zumindest teilweise überlagert sind.

Die DE 10 2014 216 278 A1 betrifft eine Vorrichtung zur interferometrischen Vermessung eines Objekts wobei die Vorrichtung eine optische Messkopfeinheit, einen Messstrahl-Lichtleiter und einen Empfangsstrahl-Lichtleiter aufweist, wobei die Messkopfeinheit im Strahlengang des Messstrahls zwischen Strahlteiler und Objekt und im Strahlengang des Empfangsstrahls zwischen Objekt und Detektor angeordnet ist, wobei der Messstrahl über den Messstrahl-Lichtleiter zu der Messkopfeinheit gleitet wird und der Empfangsstrahl mittels der Messkopfeinheit in den Empfangsstrahl-Lichtleiter eingekoppelt und mittels des Empfangsstrahl-Lichtleiters zu dem Detektor geleitet wird.

Die EP 2 589 924 A1 betrifft eine Vorrichtung zur interferometrischen Vermessung eines Objekts wobei die Strahlteilervorrichtung zur Aufteilung des Ausgangsstrahls in einen Messstrahl ausgebildet ist, einen ersten Referenzstrahl und mindestens einen zweiten Referenzstrahl, dass die Vorrichtung mindestens einen zweiten Detektor aufweist und Überlagerungsvorrichtung und zweiter Detektor derart zusammenwirkend ausgebildet sind, dass der von dem Objekt zumindest teilweise gestreute Messstrahl als erster Empfangsstrahl und der zweite Referenzstrahl auf mindestens einer Detektorfläche des zweiten Detektors überlagert sind.

Die US 4 436 419A beschreibt ein Messgerät, welches mittels Interferometrie arbeitet, die auf die Speckle-Muster der Strahlung angewendet wird, die von zwei Punkten auf der Objektoberfläche reflektiert wird.

C. Exner, M. Gröschl, S. Rade, C. Focke, E. Benes ("In-Plane Laser-Doppler-Velocimeter Sensor Head for the Measurement of Surface Structural Intensity") beschreiben ein Verfahren zum Bestimmen von Oberflächeneigenschaften einer Probe mittels eines Laser-Doppler-Verfahrens. Hierbei werden zwei Strahlpfade eines Lasers in einem schrägen Winkel zueinander auf der Oberfläche der Probe zur Interferenz gebracht und ausgewertet.

K. Maru, S Katsumi and R. Matsuda ("Nonmechanical compact probe for cross-sectional velocity measurement based on differential laser Doppler velocimetry") beschreiben ein Verfahren zum Bestimmen einer Geschwindigkeit einer Oberfläche mittels interferierender Pfade eines Laserstrahls.

A.T.Waz, G Dudzik, P.R. Kaczmarek and K.M Abramski ("Multichannel WDM vibrometry at 1550nm") offenbart ein System und ein Vefahren zum Bestimmen von Vibrationen mittels eines multikanaligen Laseraufbaus. Hierbei werden unterschiedliche Laserquellen genutzt.

Die WO 2017/015424 A1 beschreibt einen Multistrahl-Laser-Sensor, welcher mittels Interferometrie Vibrationen aufnimmt.

Eine Aufgabe der Erfindung ist es, den Stand der Technik zu verbessern. Es ist insbesondere eine Aufgabe der Erfindung, anstatt der zwei Laserstrahlquellen, wie sie in der Dehnungsmessapparatur des Stands der Technik verwendet werden, lediglich eine einzige Laserstrahlquelle zu verwenden. Eine weitere Aufgabe der Erfindung ist es, ein erzeugtes Interferenzstreifenmuster besser und effektiver zu verwerten.

Gelöst wird die Aufgabe durch einen kontaktlosen optischen Dehnungssensor gemäß Anspruch 1.

Der kontaktlose optischer Dehnungssensor weist eine Laserstrahlquelle zur Erzeugung eines ersten Laserstrahls und eines zweiten Laserstrahls, welcher gegenüber dem ersten Laserstrahls frequenzverschoben ist, auf. Ferner weist der optische Dehnungsmesssensor eine erste und eine zweite Vorrichtung zum Messen einer Intensität eines Laserstrahls oder Lichtstrahls auf.

Der kontaktlose optische Dehnungssensor ist ausgebildet und eingerichtet, dass der erste Laserstrahl und der zweite Laserstrahl auf einer Oberfläche eines Messobjektes unter einem Winkel zueinander zur Interferenz gebracht werden, wodurch ein Interferenzstreifenmuster auf der Oberfläche des Messobjekts erzeugt wird, dass ein erster Bereich des Interferenzstreifenmusters auf die erste Vorrichtung zum Messen einer Intensität eines Laserstrahls und ein zweiter Bereich des Interferenzstreifenmusters auf die zweite Vorrichtung zum Messen einer Intensität eines Laserstrahls abgebildet wird, wobei der erste Bereich und der zweite Bereich disjunkt sind, und dass ein Signal der ersten Vorrichtung zum Messen einer Intensität eines Laserstrahls und ein Signal der zweiten Vorrichtung zum Messen einer Intensität eines Laserstrahls hinsichtlich der Frequenz und/oder der Phase differentiell ausgewertet werden.

Unter dem Begriff disjunkt wird vorliegend verstanden, dass die beiden Bereiche keine gemeinsamen Punkte aufweisen und einen von null verschiedenen Abstand voneinander aufweisen.

Der kontaktlose optische Dehnungssensor bildet vorteilhafterweise zwei räumlich getrennte Messbereiche innerhalb des Interferenzstreifenmusters, d. h. den ersten und zweiten Bereich, auf jeweils einen unabhängigen Photodetektor ab. Dies kann auch so ausgedrückt werden, dass in einem Interferenzstreifenmuster, welches im Stand der Technik als ein Messpunkt benutzt wird, durch optische Abbildung und elektronische Auswertung zwei unabhängige Messpunkte gewonnen werden.

Erfindungsgemäß erfolgt die Abbildung des ersten Bereichs des Interferenzstreifenmusters auf die erste Vorrichtung zum Messen einer Intensität eines Laserstrahls und die Abbildung des zweiten Bereichs des Interferenzstreifenmusters auf die zweite Vorrichtung zum Messen einer Intensität eines Laserstrahls mithilfe einer Optik.

Um die Dehnung oder die Dehnungsgeschwindigkeit über der Zeit zu erhalten, kann die Differenz der Dopplerverschiebungen der beiden Signale berechnet werden.

Gemäß einer bevorzugten Ausführungsform werden das Signal der ersten Vorrichtung zum Messen einer Intensität eines Laserstrahls und das Signal der zweiten Vorrichtung zum Messen einer Intensität eines Laserstrahls in der Frequenz oder der Phase demoduliert. Dies erfolgt bevorzugt elektronisch.

Bevorzugt werden die beiden demodulierten Signale mithilfe eines Frequenzsubtrahierers voneinander abgezogen. Dadurch kann aus beiden Photodetektorsignalen über den Zusammenhang $\Delta s \cdot \varphi / 2\pi$ entweder die Geschwindigkeit oder die Auslenkung in Richtung quer zu den Interferenzstreifen als Messsignal gemessen werden, wobei $\varphi$ die Phase des demodulierten Signals und $\Delta s$ der Interferenzstreifenabstand ist.

Die Vorrichtung zum Messen einer Intensität eines Laserstrahls kann ein Photodetektor sein. Gemäß einer bevorzugten Ausführungsform wird jedes Signal einer Vorrichtung zum Messen einer Intensität eines Laserstrahls mithilfe eines Analog-Digital-Wandlers in ein digitales Signal gewandelt und bevorzugt in der Frequenz demoduliert. Danach werden die so erhaltenen Signale in der Frequenz subtrahiert und die erhaltene Differenz integriert durch Multiplikation des Ergebnisses mit dem Faktor $\dfrac{\Delta s}{2\pi\Delta D}$ , wobei $\Delta D$ der Abstand der Messbereiche ist, ergibt sich das digitale Dehnungssignal.

Alternativ hierzu können die beiden Signale der beiden Vorrichtungen zum Messen einer Intensität eines Laserstrahls mithilfe eines Mischers, eines Tiefpassfilters, eines Frequenzdemodulators, eines Integrators verarbeitet werden. Diese Verarbeitung erfolgt bevorzugt elektronisch. Eine anschließende Multiplikation mit demselben oben genannten Faktor ergibt wiederum das digitale Dehnungssignal. Diese Ausführung hat den Vorteil, dass nur ein Analog-Digital-Wandler und ein Demodulator benötigt werden, wodurch besonders kostengünstig eine hohe Abtastungsrate erzielt werden kann. Eine weitere Realisierungsmöglichkeit zur Erzeugung des IQ-Signals ist es, dass das Quadratursignal analog mit einem Sinus- und Kosinussignal gemischt wird und man zwei Analog-Digital-Umsetzer verwendet.

Um Stauchung und Streckung unterscheiden zu können, kann ein Quadratursignal erzeugt werden. Zur Erzeugung und Auswertung eines solchen Quadratursignals sowie weiterer Ausführungen zu Laser-Doppler-Vibrometern siehe Kapitel 9, insbesondere Kapitel 9.3, nachfolgend aufgeführter Veröffentlichung:

Steger, Heinrich & Wörtge, Michael & Siegmund, Georg & Rembe, C. (2006): "Measuring MEMS in Motion by Laser Doppler Vibrometry", Optical Inspection of Microsystems", ISBN 9781420019162, LCCN 2005046670, Verlag CRC Press, 2016, Seiten 245-292 (Kapitel 9)

Um die Notwendigkeit einer aufwendigen Justierung an jedem Einsatzort entfallen zu lassen, kann die Laserstrahlquelle einen einzigen Laser, eine Strahlteilervorrichtung und eine Vorrichtung zur Frequenzverschiebung der von dem Laser emittierten Strahlung aufweisen. Hierbei wird ein Laserstrahl des Lasers mithilfe der Strahlteilervorrichtung in den ersten Laserstrahl und den zweiten Laserstrahl aufgespalten und die Frequenz des ersten Laserstrahls oder des zweiten Laserstrahls mithilfe der Vorrichtung zur Frequenzverschiebung verschoben.

Die Strahlteilervorrichtung kann ein Polarisationsstrahlteilerwürfel sein. Dies hat den Vorteil eines robusten Standardbauteils.

Bevorzugt ist die Vorrichtung zur Frequenzverschiebung der von der Laserstrahlquelle emittierten Strahlung ein akusto-optischer Modulator (AOM), welche auch Bragg-Zelle genannt wird. Bevorzugt ist die Bragg-Zelle eine Slow-Shear-Mode-Braggzelle, welche eine geringe Ansteuerleistung benötigt, jedoch die Polarisation dreht.

Die Laserstrahlquelle kann einen ersten Laser und einen zweiten Laser, welcher gegenüber dem ersten Laser frequenzverschoben ist und mit dem ersten Laser phasensynchronisiert ist, aufweisen. Hierdurch wird vorteilhafterweise erreicht, dass keine Vorrichtung zur Frequenzverschiebung benutzt werden muss und dass die beiden Laser zueinander kohärent sind.

Gemäß einer bevorzugten Ausführungsform liegt die verwendete Laserwellenlänge zwischen 1500 und 1600 nm. Besonders bevorzugt liegt die verwendete Laserwellenlänge bei 1550 nm. Dies hat den Vorteil, dass hier bei 10 mW noch Laserklasse 1 vorliegt und dass Licht dieser Wellenlänge nicht auf die Netzhaut fällt. Für einen lasersicheren Sensor hat man somit 25-mal mehr Photonen als im sichtbaren Bereich zur Verfügung. Darüber hinaus können rauschärmere Detektoren hergestellt werden. Ferner ist es bevorzugt, dass eine sichtbare LED zwischen den beiden Photodetektoren angeordnet wird, welche auf den Messpunkt abgebildet wird, wodurch auch für einen Infrarotsensor der Messpunkt mit sichtbaren Licht angezeigt werden kann.

Bevorzugt liegt eine zu messende Dehnung der Oberfläche des Messobjektes in einer Ebene, welche durch die Richtungen der zwei aufgespalten Lichtstrahlen auf der Oberfläche des Messobjekts gegeben sind. Der erste und zweite Bereich des Interferenzstreifenmusters liegen ebenfalls in dieser Ebene. Hierdurch wird vorteilhafterweise erreicht, dass entlang dieser Ebene die erzielbare Genauigkeit der Messung maximal ist.

Gemäß einer bevorzugten Ausführungsform ist eine optische LED in der Mitte zwischen den beiden Vorrichtungen zum Messen einer Intensität eines Laserstrahls angeordnet, wobei das von der LED emittierte Licht durch dieselbe Optik auf das Messobjekt abgebildet wird, welche verwendet wird, um den ersten und zweiten Bereich des Interferenzstreifenmusters auf die erste und zweite Vorrichtung zum Messen einer Intensität eines Laserstrahls abzubilden. Hierdurch wird vorteilhafterweise erreicht, dass auch für Infrarotsensoren die Position des Messpunkts mit sichtbaren Licht angezeigt werden kann.

Gemäß einer bevorzugten Ausführungsform liegt der Abstand der Interferenzstreifen zwischen 1 μm und 500 μm, bevorzugt zwischen 1 μm und 50 μm. Der Abstand der Interferenzstreifen kann mithilfe des Kreuzungswinkels θ und der Wellenlänge λ verändert werden.

Der in das Interferenzmuster abgebildete Photodetektorabstand, d.h. der Abstand der Messbereiche, kann zwischen 1 mm und 10 mm liegen. Der Abstand der Messbereiche ergibt sich aus der kleinsten Länge, für die eine homogene Ausdehnung angenommen werden kann. Ein Vergleich mit der Länge von Dehnungsmessstreifen, die in Betriebs¬festigkeitsanalyse eingesetzt werden, ergibt einen Wert zwischen 3 und 6 mm.

Der in das Interferenzmuster abgebildete Photodetektordurchmesser kann zwischen 50 μm und 2 mm liegen, was die Messbereichsgröße definiert.

Die Messbereichsgröße ist ein Kompromiss zwischen Mittelungsfläche für die Geschwindigkeitsmessung, die möglichst klein sein sollte, und dem Signal-zu-Rausch-Verhältnis. 2 mm ist hierbei ein möglicher Wert. Da die Lichtdetektion nicht schrotrauschbegrenzt erfolgt, wird der Rauschpegel durch die Elektronik bestimmt, insbesondere durch das Rauschen der Photodetektorschaltung. Daher sollte die Sensitivität bezüglich der Auslenkung möglichst hoch sein. Das bedeutet, dass möglichst kleine Werte für den Interferenzstreifenabstand vorteilhaft sind.

Somit muss auch ein Kompromiss zwischen dem Winkel zwischen den Strahlen im Messpunkt, der möglichst groß sein sollte, und dem Arbeitsabstand und der Sensorbreite geschlossen werden. Die folgende Formel zeigt die Verhältnisse zwischen dem Kreuzungswinkel θ der einfallenden Strahlung, dem Interferenzstreifenabstand Δs und der Wellenlänge λ des einfallenden Lichts.

$$\Delta s = \frac{\lambda}{2 \sin \frac{\theta}{2}}$$

Gemäß einer Ausführungsform ist eine Summe einer Fläche des ersten Bereichs des Interferenzstreifenmusters und einer Fläche des zweiten Bereichs des Interferenzstreifenmusters größer als 0,5% einer Fläche des Interferenzstreifenmusters auf dem Messobjekt. Besonders bevorzugt ist diese Summe größer als 10 %, noch weiter bevorzugt größer als 50 % der Fläche des Interferenzstreifenmusters. Die Fläche des Interferenzstreifenmusters kann berechnet werden durch die Überlappung der Volumina der beiden Laserstrahlen und der Oberfläche des Messobjektes. Hierbei wird das Volumen eines Laserstrahls für einen Gauß-Strahl durch das Innere des Strahldurchmessers definiert. Die Hälfte des Strahldurchmessers, der Strahlradius, ist definiert als der Abstand zur optischen Achse, an dem die Intensität also auf $1/e^2$ gefallen ist. Der Vorteil des genannten Merkmals besteht bei großen Prozentwerten darin, dass ein schwächerer Laser eingesetzt werden kann und bei größeren Werten, dass das Signal-zu-Rausch-Verhältnis besser ist.

Bevorzugt ist die Fläche des Interferenzstreifenmusters auf der Probe so gewählt, dass die in das Interferenzmuster abgebildeten Empfangsflächen der Photodetektoren innerhalb der Fläche des Streifenmusters liegen. Hierbei ist es bevorzugt, dass die beiden abgebildeten Photodetektorflächen so groß sind, dass sie gerade nicht aus dem Streifenmuster herausragen.

Der Dehnungssensor kann ferner mindestens ein holographisches Element zur Erzeugung des ersten Laserstrahls und/oder des zweiten Laserstrahls in jeweils einer transversalen Doppelmode aufweisen. Bevorzugt ist die transversale Doppelmode die TEM01-Mode. Durch dieses Merkmal wird vorteilhafterweise erreicht, dass das Licht des Lasers gezielt auf die Stellen Differenzstreifenmusters gebracht werden kann, in denen die Bilder der Vorrichtungen zum Messen einer Intensität eines Laserstrahls liegen. Hierdurch kann das Licht besser auf den Vorrichtungen zum Messen einer Intensität eines Laserstrahls konzentriert werden.

Hierbei ist es bevorzugt, dass eine erste Fläche auf der Oberfläche des Messobjekts, welche auf die Oberfläche der ersten Vorrichtung zum Messen einer Intensität eines Laserstrahls abgebildet wird, innerhalb eines ersten Teils der transversalen Doppelmode liegt und eine zweite Fläche auf der Oberfläche des Messobjekts, welche auf die Oberfläche der zweiten Vorrichtung zum Messen einer Intensität eines Laserstrahls abgebildet wird, innerhalb eines zweiten Teils der transversalen Doppelmode liegt. Hierbei ist bevorzugt die erste Fläche größer als 80 % einer Fläche des ersten Teils der transversalen Doppelmode und/oder die zweite Fläche größer als 80 % einer Fläche des zweiten Teils der transversalen Doppelmode.

Die Frequenz des ersten Laserstrahls kann mithilfe einer Frequenzverschiebeeinrichtung permanent gegenüber der Frequenz des zweiten Laserstrahls in der Frequenz verschoben werden, so dass sich das Interferenzstreifenmuster jederzeit verändert. Hierbei kann entweder die Frequenz des ersten Laserstrahls oder die Frequenz des zweiten Laserstrahls verändert werden. Ferner können sowohl die Frequenz des ersten Laserstrahls als auch die Frequenz des zweiten Laserstrahls verändert werden, so dass sich eine Differenzfrequenz permanent ändert. Die Frequenzverschiebeeinrichtung kann ein Frequenzschieber wie z.B. eine Bragg-Zelle sein. Auf diese Art und Weise wird auf den Photodetektoren ein heterodynes Trägersignal erzeugt, d.h. ein Signal mit einem Träger. Dies hat den Vorteil, dass man einen hochempfindlichen Sensor erhält, welcher Längen äußerst genau, d.h. mit einer relativen Messunsicherheit kleiner als 0,1 %, vermessen kann. Auslenkungsamplituden bei Schwingungen können hierdurch mit sehr hoher Auflösung, d.h. im Pikometerbereich gemessen werden.

Gemäß der erfinderischen Ausführungsform weist der Dehnungssensor eine dritte Vorrichtung zum Messen einer Intensität eines Laserstrahls, einen ersten polarisierenden Strahlteiler, welcher vor der ersten Vorrichtung zum Messen einer Intensität eines Laserstrahls angeordnet ist, wobei Licht einer ersten Polarisation vom ersten Bereich des Interferenzstreifenmusters auf die erste Vorrichtung zum Messen einer Intensität eines Laserstrahls und Licht einer zweiten Polarisation vom ersten Bereich des Interferenzstreifenmusters auf die dritte Vorrichtung zum Messen einer Intensität eines Laserstrahls abgebildet wird, eine vierte Vorrichtung zum Messen einer Intensität eines Laserstrahls und einen zweiten polarisierenden Strahlteiler, welcher vor der zweiten Vorrichtung zum Messen einer Intensität eines Laserstrahls angeordnet ist, auf, wobei Licht einer ersten Polarisation vom zweiten Bereich des Interferenzstreifenmusters auf die zweite Vorrichtung zum Messen einer Intensität eines Laserstrahls und Licht einer zweiten Polarisation vom zweiten Bereich des Interferenzstreifenmusters auf die vierte Vorrichtung zum Messen einer Intensität eines Laserstrahls abgebildet wird.

Diese Ausführungsform nutzt die Vorteile der Diversität in Polarisation. Weitere Ausführungsformen nutzen die Diversität im Betrachtungswinkel oder eine Kombination der Diversität in Betrachtungswinkel und Polarisation. Die Streuung von kohärenter Strahlung an einer optisch rauen Oberfläche verursacht durch die kohärente Überlagerung der Feldkomponenten im Fernfeld eine granulierte Intensitätsverteilung, das sogenannte Specklemuster. Dieses Specklemuster wird innerhalb des Detektionsraumwinkels von dem jeweiligen Detektor gemittelt. Dennoch kann es durch destruktive Interferenz zu Signalausfällen kommen, während derer keine Informationen über den momentanen Dehnungszustand vorliegen. Eine generelle Lösung zur Unterdrückung dieses Phänomens ist die Nutzung des Prinzips der Diversität in Polarisation und Betrachtungswinkel. In nicht überlappenden Raumwinkeln und in orthogonalen Polarisationen bilden sich statistisch unabhängige Specklemuster aus, vorausgesetzt, dass eine zufällige Verteilung von Streuzentren auf der Messoberfläche vorliegt. Die Verwendung dieses Prinzips in der Laser-Doppler-Vibrometrie ist Stand der Technik. Hinsichtlich der Ausnutzung der Polarisationsdiversität können durch Einstrahlung beider orthogonaler Polarisationskomponenten, z.B. zirkulare Polarisation, zwei statistisch-unabhängige Specklemuster in den linear oder zirkular orthogonalen Polarisationen ausgebildet werden. Für jeden Messbereich werden hierbei beide Specklemuster durch ein polarisationsselektives Element auf zwei Detektoren abgebildet. Durch eine Signalverarbeitung erfolgt die Bewertung des Signals aus den orthogonalen Polarisationen, z.B. des Signal-Rausch-Verhältnisses, und es kann das bessere Signal der weiteren Signalausauswertung zugeführt werden. Alternativ kann durch gewichtete Summation der beiden Signale auch ein kombiniertes Signal für die weitere Signalverarbeitung erzeugt werden.

Gemäß einer weiteren bevorzugten Ausführungsform wird für jeden Teilbereich, d.h. für den ersten und zweiten Bereich, eine polarisationsselektive Strahlteilung vorgenommen, welche derart ausgebildet ist, dass mittels zwei Photodetektoren zueinander orthogonal polarisierte Anteile ausgewertet werden, insbesondere zueinander senkrecht stehende lineare oder gegenläufige zirkulare Polarisationsanteile. Hierdurch kann eine verbesserte Auswertung der Signale erfolgen.

Der Dehnungssensor kann eine zusätzliche Signalverarbeitungseinheit aufweisen, welche derart ausgebildet ist, dass für beide Messbereiche eine Kombination der Teilsignale erfolgt, vorzugsweise durch gewichtete Summation der Teilsignale. Hierdurch kann eine verbesserte Auswertung der Signale erfolgen.

Ferner können mindestens zwei Photodetektoren für jeden Teilbereich die Streustrahlung aus nicht- oder nur teilweise überlappenden Raumwinkeln auswerten. Hierdurch kann ebenfalls eine verbesserte Auswertung der Signale erfolgen.

Gemäß einer weiteren bevorzugten Ausführungsform weist der Dehnungssensor ferner auf: eine dritte Vorrichtung zum Messen einer Intensität eines Laserstrahls; und eine vierte Vorrichtung zum Messen einer Intensität eines Laserstrahls; wobei Licht eines ersten Teilbereichs des ersten Bereichs (143) des Interferenzstreifenmusters (142) auf die erste Vorrichtung (131) zum Messen einer Intensität eines Laserstrahls und Licht eines zweiten Teilbereichs des ersten Bereichs (143) des Interferenzstreifenmusters (142) auf die dritte Vorrichtung (134) zum Messen einer Intensität eines Laserstrahls abgebildet wird; wobei eine symmetrische Differenzmenge des ersten und zweiten Teilbereichs des ersten Bereichs (143) nicht leer ist; wobei Licht eines ersten Teilbereichs des zweiten Bereichs (144) des Interferenzstreifenmusters (142) auf die zweite Vorrichtung (132) zum Messen einer Intensität eines Laserstrahls und Licht eines zweiten Bereichs (144) des Interferenzstreifenmusters (142) auf die vierte Vorrichtung (136) zum Messen einer Intensität eines Laserstrahls abgebildet wird, wobei eine symmetrische Differenzmenge des ersten und zweiten Teilbereichs des zweiten Bereichs (143) nicht leer ist. Durch diese Ausführungsform kann eine Winkeldiversität der Auswertung realisiert werden.

Der optische Aufbau kann teilweise oder vollständig als photonischer integrierter Schaltkreis realisiert sein. Dies hat den Vorteil, dass der Dehnungssensor als kompakte, kleine Einheit produziert werden kann, welche überdies äußerst stabil ist.

Im Weiteren wird die Erfindung anhand von Zeichnungen näher erläutert. Es zeigen

Figur 1 ein Beispiel eines kontaktlosen optischen Dehnungssensors, welcher nicht vom Schutzumfang der Ansprüche umfasst ist.

Figur 2 und Figur 3 jeweils das Interferenzstreifenmuster auf dem Messobjekt mit dem ersten und zweiten Bereich, welche jeweils auf die Photodetektoren abgebildet werden,

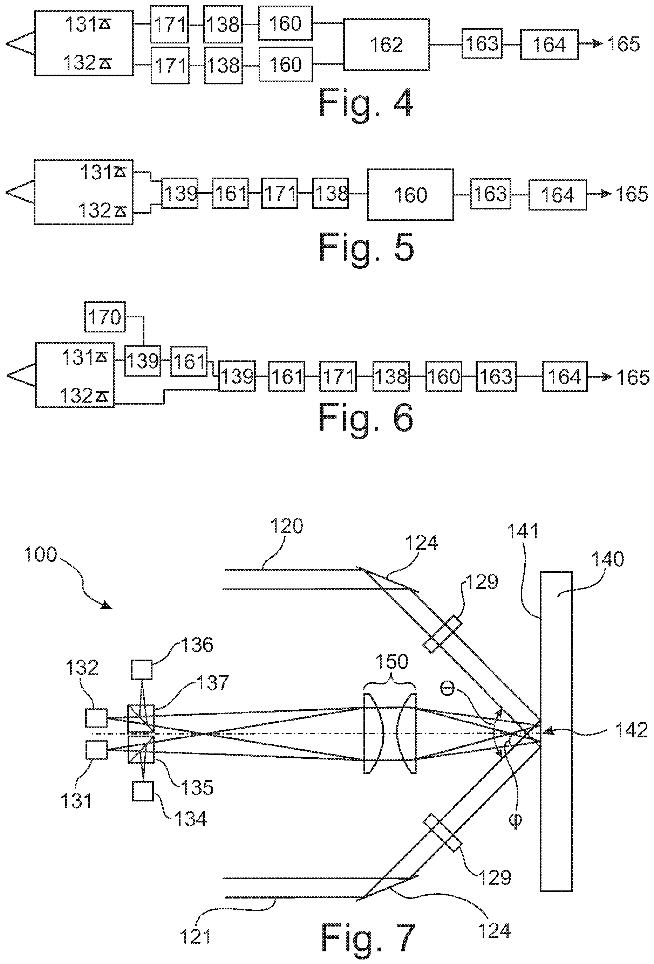

Figuren 4, 5 und 6 unterschiedliche Ausführungsformen der Signalverarbeitung der Signale der Photodetektoren und

Figur 7 eine Ausführungsform eines kontaktlosen optischen Dehnungssensors gemäß einem Ausführungsbeispiel der Erfindung, welche Polarisationsdiversität verwendet.

Ein kontaktloser optischer Dehnungssensor 100 weist einen Aufbau nach einem differentiellen Laser-Doppler-Anemometrieprinzip auf. Der vom Laser 111 emittierte Laserstrahl wird von einem Kollimator 119 kollimiert und anschließend von einer Strahlteilervorrichtung 112, welche vorliegend ein Polarisationsstrahlteiler ist, in den ersten Laserstrahl 120 und den zweiten Laserstrahl 121 geteilt. Der erste Laserstrahl 120 wird von einem Strahlaufweiter 123 aufgeweitet und von einem Spiegel 124 auf eine Oberfläche 141 des Messobjektes 140 gelenkt.

Der zweite Laserstrahl 121 wird von einer Vorrichtung 113 zur Frequenzverschiebung, welche vorliegend eine Bragg-Zelle ist, in der Frequenz verschoben. Danach wird der zweite Laserstrahl 121 von einem Prisma 125 um 90° umgelenkt, von einem Strahlaufweiter 123 aufgeweitet und von einem Spiegel 124 ebenfalls auf die Oberfläche 141 des Messobjektes 140 gelenkt. Hierbei treffen der erste Laserstrahl 120 und der zweite Laserstrahl 121 unter einem Winkel θ auf die Oberfläche 141 des Messobjektes 140. Hierbei weist sowohl der erste Laserstrahl 120 als auch der zweite Laserstrahl 121 gegenüber der Flächennormalen der Oberfläche 141 des Messobjektes 140 jeweils einen Winkel θ/2 auf.

Die Bragg-Zelle ist eine Slow-Shear-Mode-Braggzelle, welche wenig Ansteuerleistung benötigt, jedoch die Polarisation dreht. Da das Licht über den einen Polarisationsstrahlteiler geteilt wird, liegt im Interferenzgebiet auf der Oberfläche 141 des Messobjektes 140 dieselbe Polarisation vor.

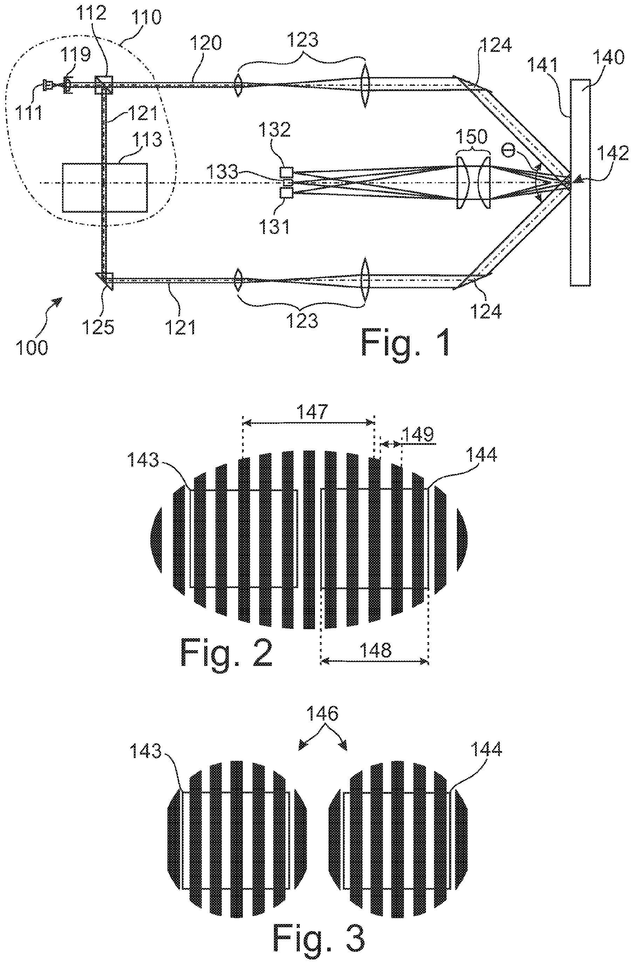

Ein erster Bereich 143 und ein zweiter Bereich 144 des Interferenzstreifenmusters 142 werden mithilfe einer Empfangsoptik 150 auf eine erste Photodiode 131 und eine zweite Photodiode 132 abgebildet. Der erste Bereich 143 und der zweite Bereich 144 des Interferenzstreifenmusters 142 sind in den Figuren 2 und 3 für unterschiedliche Beispiele abgebildet. Eine LED 133 mit sichtbarem Licht wird verwendet, um eine Mitte zwischen den beiden Photodioden 131, 132 umgekehrt auf das Messobjekt 140 abzubilden.

Das Interferenzstreifenmuster 142 befindet sich auf der Oberfläche 141 des Messobjektes 140. Das Interferenzstreifenmuster 142 weist einen erster Bereich 143 und einen zweiter Bereich 144 auf, welche mithilfe der Empfangsoptik 150 auf die erste Photodiode 131 und die zweite Photodiode 132 abgebildet werden. Hierbei sind der erste Bereich 143 und der zweite Bereich 144 disjunkt, haben jeweils dieselbe Fläche und weisen dieselbe quadratische Form auf. Alternativ kann eine runde Form verwendet werden. Der Abstand der Interferenzstreifen ist $\Delta s$ 149. Der durch die Empfangsoptik 150 auf die Oberfläche 141 des Messobjektes 140 abgebildete Photodetektordurchmesser ist $\Delta P$ 148. Der durch die Empfangsoptik 150 auf die Oberfläche 141 des Messobjektes 140 abgebildete Abstand der Photodetektoren ist $\Delta D$ 147.

Falls der Parameter $\Delta P$ klein gegen $\Delta D$ ausgelegt wird, kann eine minimale Dehnung in $\Delta P$ erreicht werden, so wird bei Benutzung der Grundmode $TEM_{00}$ nur ein geringer Teil des auf die Oberfläche 141 des Messobjektes 140 eingestrahlten Lichts auf den Detektoren eingesammelt. Falls jedoch die transversale Doppelmode $TEM_{01}$ verwendet wird, so wird wesentlich mehr Licht auf den Photodetektoren detektiert. Dies wird erreicht, indem ein holographisches Element direkt hinter dem Laser 111 angeordnet wird, welches aus der transversalen Einzelmode $TEM_{00}$ des Lasers eine Doppelmode $TEM_{01}$ erzeugt. Die Flächen des ersten Bereichs 143 und des zweiten Bereichs 144 sind bei Benutzung der transversale Doppelmode $TEM_{01}$ im Vergleich zur Gesamtfläche des Interferenzstreifenmusters 142 wesentlich größer als bei Verwendung der Grundmode $TEM_{00}$.

Gemäß eines Beispiels der differenziellen Auswertung der Signale der Photodetektoren werden die Signale der Photodioden 131 und 132 jeweils mithilfe einer Pegelregelung 171 und eines Analog-Digital-Wandlers 138 in ein digitales Signal gewandelt und danach jeweils mithilfe eines Frequenz-Demodulators 160 demoduliert. Danach werden die beiden demodulierten Signale in einem Frequenzsubtrahierer 162 voneinander abgezogen und die Differenz in einem Integrator 163 integriert. In der Verarbeitungseinheit 164 wird das Ergebnis des Integrators 163 mit dem Faktor $\dfrac{\Delta s}{2\pi\Delta D}$ multipliziert, woraufhin als Ergebnis das digitale Dehnungssignal 165 erhalten wird.

Gemäß eines weiteren Beispiels der differenziellen Auswertung der Signale der Photodetektoren werden die Signale der Photodioden 131 und 132 in einem Mischer 139 gemischt und das erhaltene Ergebnis in einen Tiefpassfilter 161 gefiltert. Das gefilterte Signal wird mit einer Pegelregelung 171 auf den Eingangsbereich eines Analog-Digital-Wandlers 138 angepasst und dann durch den Analog-Digital-Wandler 138 in ein digitales Signal gewandelt, welches in einem Frequenz-Demodulator 160 demoduliert und anschließend in einem Integrator 163 integriert wird. In der Verarbeitungseinheit 164 wird das Ergebnis des Integrator 163 mit dem Faktor $\dfrac{\Delta s}{2\pi\Delta D}$ multipliziert, woraufhin man als Ergebnis das digitale Dehnungssignal 165 erhält.

Gemäß eines weiteren Beispiels der differenziellen Auswertung der Signale der Photodetektoren wird das Signal der Photodiode 131 zunächst mit Hilfe eines Mischers 139 und eines Lokaloszillatorsignals 170 heruntergemischt, wobei der hochfrequente Teil des Mischsignals durch einen Tiefpassfilter 161 weggefiltert wird, so dass nur das Differenzsignal übrigbleibt. Dadurch bekommt das Detektorsignal einen Frequenzoffset, so dass eine Richtungserkennung möglich wird. Danach wird dieses Signal mit dem Signal der Photodiode 132 multipliziert, was im zweiten Mischer 139 stattfindet, und wodurch man mit Hilfe eines weiteren Tiefpasses 161 die Differenzfrequenz zwischen beiden Signalen erhält. Nach einer Pegelregelung 171, einem Analog-Digital-Wandler 138 und einer Frequenzdemodulation 160 erhält man ein Geschwindigkeitssignal mit einem Offset, der abgezogen werden kann. Die Geschwindigkeit kann dadurch mit Vorzeichen bestimmt werden. Die Schritte nach der Frequenzdemodulation 160 entsprechen den vorstehend beschriebenen Beispielen.

Um den gesamten Arbeitsbereich des Analog-Digital-Wandler 138 auszunutzen und damit den Einfluss des Quantisierungsrauschens zu minimieren, verwendet man bevorzugt vor dem Analog-Digital-Wandler 138 eine Pegelregelung. Bevorzugt wird eine solche Pegelregelung vor jeden Analog-Digital-Wandler 138 verwendet.

Bei dem vorliegenden Beispiel lauten die Signale mit Trägerfrequenz $\omega_c$ der Photodioden 131 und 132 für beide Empfänger:

$$x_1(t) = \hat{U}_1 \cos((\omega_c + \omega_1)t + \varphi_1)$$

$$x_2(t) = \hat{U}_2 \cos\big((\omega_c + \omega_2)t + \varphi_2\big).$$

Hierbei sind $\hat{U}_1$ und $\hat{U}_2$ die Amplituden der Signale der Photodioden 131 und 132, $\omega_c$ die Trägerfrequenz, $\omega_1$ und $\omega_2$ sind die Kreisfrequenzen, welche den Dopplerverschiebungen von Licht aus dem ersten Bereich 143 und dem zweiten Bereich 144 auf der Oberfläche 141 des Messobjektes 140 entsprechen, und $\varphi_1$ und $\varphi_2$ die jeweiligen Phasen

der jeweiligen Detektorsignale. Die Trägerfrequenz $\omega_c$ entspricht der Frequenz der Bragg-Zelle.

Nach dem ersten Mischer 139 ergibt sich das folgende Signal:

$$x_1'(t) = \hat{U}_1' \cos((\omega_c + \omega_1 - \omega_{LO})t + \varphi_1)$$

wobei sind $\hat{U}_1'$ die Amplitude des heruntergemischten Signals ist und $\omega_{LO}$ die Frequenz des Lokaloszillator-Signals ist.

Der zweiten Mischer 139 multipliziert die Signale xi(t) und $x_2$(t) zu:

$$x'(t) = \hat{U}_{12} \cos\big((\omega_{LO} + \omega_1 - \omega_2)t + \varphi_{12}\big),$$

wobei $\hat{U}_{12}$ eine Amplitude und $\varphi_{12}$ eine Differenzphase ist.

Es ist wichtig, dass $\omega_{LO}$ so gewählt wird, dass die Bedingung

$$\omega_{LO} > \max|\omega_1 - \omega_2|$$

jederzeit erfüllt ist. Das Vorzeichen der Differenzfrequenz der beiden Messpunkte bestimmt die Dehnungsrichtung.

Die Signalverarbeitung des Beispiels der differenziellen Auswertung der Signale der Photodetektoren sind kompakt auf einem FPGA realisiert, womit man einen kompakten Dehnungssensor erhält. Alternativ werden die Schaltungen als optische Aufbauten realisiert, welche in photonischen integrierten Schaltkreisen (engl.: photonic integrated circuit = PIC) integriert sind. Dazu wird der PIC auf Polymerbasis realisiert.

Eine Ausführungsform eines kontaktlosen optischen Dehnungssensors verwendet Polarisationsdiversität. Der Aufbau der zweiten Ausführungsform des Dehnungssensors 100 ist nach Erzeugung des Laserstrahls durch den Laser 111 gleich oder sehr ähnlich der ersten Ausführungsform. Der erste Laserstrahl 120 und der zweiten Laserstrahl 121 verlaufen parallel zueinander. Sowohl der erste Laserstrahl 120 als auch der zweite Laserstrahl 121 werden jeweils mithilfe eines Spiegels 124 auf die Oberfläche 141 des Messobjektes 140 gelenkt, wodurch das Interferenzstreifenmuster 142 entsteht. Zwischen dem Messobjekt 140 und den beiden Spiegeln 124 sind jedoch zwei Verzögerungsplatten, vorliegend zwei $\lambda$/4-Plättchen, angeordnet, mit denen die Polarisation des ersten Laserstrahls 120 und des zweiten Laserstrahls 121 gedreht werden kann.

Der Kreuzungswinkel $\theta$ ist der Winkel zwischen dem ersten Laserstrahl 120 und dem zweiten Laserstrahl 121 am Ort, an dem der erste Laserstrahl 120 und der zweite Laserstrahl 121 sich kreuzen, d.h. auf dem Messobjekt 140. Der Empfangswinkel $\beta$ ist der Winkel, unter welchem ein Photodetektor das Signal des Interferenzstreifenmusters 142 empfängt.

Bei der Ausführungsform des kontaktlosen optischen Dehnungssensors werden somit unter Ausnutzung der Polarisationsdiversität beide orthogonale Polarisationskomponenten, z.B. links- und rechts-zirkulare Polarisation, eingestrahlt und somit zwei statistisch unabhängige Specklemuster in den linearen oder zirkularen orthogonalen Polarisationen ausgebildet. Die Erzeugung der unterschiedlichen Polarisationen erfolgt durch die Verzögerungsplatten 129. Für jeden Messbereich, d.h. den ersten Bereich 143 und zweiten Bereich 144, werden hierbei beide Specklemuster durch ein polarisationsselektives Element, d.h. die Polarisationsstrahlteiler 135 und 137 auf jeweils zwei Detektoren, d.h. Photodioden 131 und 134 einerseits und Photodioden 132 und 136 andererseits abgebildet. Durch eine Signalverarbeitung erfolgt die Bewertung des Signals aus den orthogonalen Polarisationen, z.B. des Signal-zu-Rausch-Verhältnisses, wobei das bessere Signal der weiteren Signalauswertung zugeführt wird. Alternativ wird durch gewichtete Summation der beiden Signale auch ein kombiniertes Signal für die weitere Signalverarbeitung erzeugt.

**Patentansprüche**

1. Kontaktloser optischer Dehnungssensor (100) aufweisend:

   eine Laserstrahlquelle (110) zur Erzeugung eines ersten Laserstrahls (120) und eines zweiten Laserstrahls (121);
   eine erste Vorrichtung (130) und eine zweite Vorrichtung (131) zum Messen einer Intensität eines Laserstrahls;
   wobei der kontaktlose optische Dehnungssensor (100) ausgebildet und eingerichtet ist,

dass der erste Laserstrahl (120) und der zweite Laserstrahl (121) auf einer Oberfläche (141) eines Messobjektes (140) unter einem Winkel (θ) zueinander zur Interferenz gebracht werden, wodurch ein Interferenzstreifenmuster (142) auf der Oberfläche (141) des Messobjekts (140) erzeugt wird;

dass ein erster Bereich (143) des Interferenzstreifenmusters (142) auf die erste Vorrichtung (131) zum Messen einer Intensität eines Laserstrahls und ein zweiter Bereich (144) des Interferenzstreifenmusters (142) auf die zweite Vorrichtung (132) zum Messen einer Intensität eines Laserstrahls abgebildet wird, wobei der erste Bereich (143) und der zweite Bereich (144) disjunkt sind; **dadurch gekennzeichnet, dass**

der Dehnungssensor eine Auswerteeinrichtung aufweist, welche eingerichtet ist,

ein Signal der ersten Vorrichtung (131) zum Messen einer Intensität eines Laserstrahls und ein Signal der zweiten Vorrichtung (132) zum Messen einer Intensität eines Laserstrahls hinsichtlich der Frequenz und/oder der Phase differentiell auszuwerten,

wobei der Dehnungssensor weiterhin aufweist:

    eine dritte Vorrichtung (134) zum Messen einer Intensität eines Laserstrahls;

    einen ersten polarisierenden Strahlteiler (135), welcher vor der ersten Vorrichtung (131) zum Messen einer Intensität eines Laserstrahls angeordnet ist,

    wobei Licht einer ersten Polarisation vom ersten Bereich (143) des Interferenzstreifenmusters (142) auf die erste Vorrichtung (131) zum Messen einer Intensität eines Laserstrahls und Licht einer zweiten Polarisation vom ersten Bereich (143) des Interferenzstreifenmusters (142) auf die dritte Vorrichtung (134) zum Messen einer Intensität eines Laserstrahls abgebildet wird;

    eine vierte Vorrichtung (136) zum Messen einer Intensität eines Laserstrahls; und

    einen zweiten polarisierenden Strahlteiler (137), welcher vor der zweiten Vorrichtung (132) zum Messen einer Intensität eines Laserstrahls angeordnet ist,

    wobei Licht einer ersten Polarisation vom zweiten Bereich (144) des Interferenzstreifenmusters (142) auf die zweite Vorrichtung (132) zum Messen einer Intensität eines Laserstrahls und Licht einer zweiten Polarisation vom zweiten Bereich (144) des Interferenzstreifenmusters (142) auf die vierte Vorrichtung (136) zum Messen einer Intensität eines Laserstrahls abgebildet wird..

2. Dehnungssensor (100) nach Anspruch 1, **dadurch gekennzeichnet, dass**
die Laserstrahlquelle (110) aufweist:

    einen einzigen Laser (111);
    eine Strahlteilervorrichtung (112); und
    eine Vorrichtung (113) zur Frequenzverschiebung der von dem Laser (111) emittierten Strahlung;
    dass ein Laserstrahl des Lasers (111) mithilfe der Strahlteilervorrichtung (112) in den ersten Laserstrahl (120) und den zweiten Laserstrahl (121) aufgespalten wird; und
    dass die Frequenz des ersten Laserstrahls (121) oder des zweiten Laserstrahls (122) mithilfe der Vorrichtung (113) zur Frequenzverschiebung verschoben wird.

3. Dehnungssensor (100) nach Anspruch 1, **dadurch gekennzeichnet, dass**
die Laserstrahlquelle (110) aufweist:

    einen ersten Laser (111); und
    einen zweiten Laser, welcher gegenüber dem ersten Laser (111) frequenzverschoben ist und mit dem ersten Laser (111) mithilfe einer Phasensynchronisierungseinrichtung phasensynchronisiert ist.

4. Dehnungssensor (100) nach einem der vorangegangenen Ansprüche, **dadurch gekennzeichnet dass**
das Signal der ersten Vorrichtung (131) zum Messen einer Intensität eines Laserstrahls und das Signal der zweiten Vorrichtung (132) zum Messen einer Intensität eines Laserstrahls oder eine Differenz des Signals der ersten Vorrichtung (131) zum Messen einer Intensität eines Laserstrahls und des Signals der zweiten Vorrichtung (132) zum Messen einer Intensität eines Laserstrahls mittels eines Demodulators (160) in der Frequenz oder der Phase demoduliert werden.

5. Dehnungssensor (100) nach einem der vorangegangenen Ansprüche, **dadurch gekennzeichnet dass**
die verwendete Laserwellenlänge zwischen 1500 und 1600 nm liegt.

6. Dehnungssensor (100) nach einem der vorangegangenen Ansprüche, **dadurch gekennzeichnet dass**
eine Summe einer Fläche des ersten Bereichs (143) des Interferenzstreifenmusters (142) und einer Fläche des zweiten Bereichs (144) des Interferenzstreifenmusters (142) größer als 0,5% der Fläche des Interferenzstreifenmusters auf dem Messobjekt ist.

7. Dehnungssensor (100) nach einem der vorangegangenen Ansprüche, ferner aufweisend:
mindestens ein holographisches Element zur Erzeugung des ersten Laserstrahls (120) und/oder des zweiten Laserstrahls (121) in jeweils einer transversalen Doppelmode (146).

8. Dehnungssensor (100) nach einem der vorangegangenen Ansprüche, **dadurch gekennzeichnet dass**
die Frequenz des ersten Laserstrahls (120) mithilfe einer Frequenzverschiebeeinrichtung permanent gegenüber der Frequenz des zweiten Laserstrahls (121) in der Frequenz verschoben wird, so dass sich das Interferenzstreifenmuster (142) jederzeit verändert.

9. Dehnungssensor (100) nach einem der Ansprüche 1 bis 8,

wobei Licht eines ersten Teilbereichs des ersten Bereichs (143) des Interferenzstreifenmusters (142) auf die erste Vorrichtung (131) zum Messen einer Intensität eines Laserstrahls und Licht eines zweiten Teilbereichs des ersten Bereichs (143) des Interferenzstreifenmusters (142) auf die dritte Vorrichtung (134) zum Messen einer Intensität eines Laserstrahls abgebildet wird;
wobei eine symmetrische Differenzmenge des ersten und zweiten Teilbereichs des ersten Bereichs (143) nicht leer ist;
wobei Licht eines ersten Teilbereichs des zweiten Bereichs (144) des Interferenzstreifenmusters (142) auf die zweite Vorrichtung (132) zum Messen einer Intensität eines Laserstrahls und Licht eines zweiten Bereichs (144) des Interferenzstreifenmusters (142) auf die vierte Vorrichtung (136) zum Messen einer Intensität eines Laserstrahls abgebildet wird,
wobei eine symmetrische Differenzmenge des ersten und zweiten Teilbereichs des zweiten Bereichs (143) nicht leer ist.

**Claims**

1. Contactless optical extensometer (100) having:

a laser beam source (110) for producing a first laser beam (120) and a second laser beam (121);
a first apparatus (130) and a second apparatus (131) for measuring an intensity of a laser beam;
wherein the contactless optical extensometer (100) is configured and embodied
in that the first laser beam (120) and the second laser beam (121) are brought into interference at an angle (θ) in relation to one another on a surface (141) of a test object (140), as a result of which an interference fringe pattern (142) is produced on the surface (141) of the test object (140);
in that a first region (143) of the interference fringe pattern (142) is imaged onto the first apparatus (131) for measuring an intensity of the laser beam and a second region (144) of the interference fringe pattern (142) is imaged onto the second apparatus (132) for measuring an intensity of a laser beam, wherein the first region (143) and the second region (144) are disjoint; **characterised in that**
the extensometer has an evaluation device, which is embodied
to evaluate a signal of the first apparatus (131) for measuring an intensity of a laser beam and a signal of the second apparatus (132) for measuring an intensity of a laser beam differentially in respect of the frequency and/or the phase,
wherein the extensometer further has:

a third apparatus (134) for measuring an intensity of a laser beam;
a first polarising beam splitter (135) arranged in front of the first apparatus (131) for measuring an intensity of a laser beam,
wherein light of a first polarisation of the first region (143) of the interference fringe pattern (142) is imaged onto the first apparatus (131) for measuring an intensity of a laser beam and light of a second polarisation of the first region (143) of the interference fringe pattern (142) is imaged onto the third apparatus (134) for measuring an intensity of a laser beam;
a fourth apparatus (136) for measuring an intensity of a laser beam; and
a second polarising beam splitter (137) arranged in front of the second apparatus (132) for measuring an intensity of a laser beam,

wherein light of a first polarisation of the second region (144) of the interference fringe pattern (142) is imaged onto the second apparatus (132) for measuring an intensity of a laser beam and light of a second polarisation of the second region (144) of the interference fringe pattern (142) is imaged onto the fourth apparatus (136) for measuring an intensity of a laser beam.

2. Extensometer (100) according to claim 1, **characterised in that**
the laser beam source (110) has:

a single laser (111);
a beam splitter apparatus (112); and
an apparatus (113) for frequency shifting the beam emitted by the laser (111);
**in that** a laser beam of the laser (111) is split into the first laser beam (120) and the second laser beam (121) by means of the beam splitter apparatus (112); and
**in that** the frequency of the first laser beam (121) or the second laser beam (122) is shifted by means of the apparatus (113) for frequency shifting.

3. Extensometer (100) according to claim 1, **characterised in that**
the laser beam source (110) has:

a first laser (111); and
a second laser, which is frequency shifted with respect to the first laser (111) and is phase synchronised with the first laser (111) by means of a phase synchronisation device.

4. Extensometer (100) according to any one of the preceding claims, **characterised in that**
the signal of the first apparatus (131) for measuring an intensity of a laser beam and the signal of the second apparatus (132) for measuring an intensity of a laser beam or a difference of the signal of the first apparatus (131) for measuring an intensity of a laser beam and the signal of the second apparatus (132) for measuring an intensity of a laser beam are demodulated in frequency or phase by means of a demodulator (160).

5. Extensometer (100) according to any one of the preceding claims, **characterised in that**
the laser wavelength is between 1500 and 1600 nm.

6. Extensometer (100) according to any one of the preceding claims, **characterised in that**
a sum of an area of the first region (143) of the interference fringe pattern (142) and an area of the second region (144) of the interference fringe pattern (142) is greater than 0.5% of the area of the interference fringe pattern on the test object.

7. Extensometer (100) according to any one of the preceding claims, further having:
at least one holographic element for producing the first laser beam (120) and/or the second laser beam (121), in each case in a transversal double mode (146).

8. Extensometer (100) according to any one of the preceding claims, **characterised in that**
the frequency of the first laser beam (120) is permanently shifted in frequency with respect to the frequency of the second laser beam (121) by means of a frequency shifting device so that the interference fringe pattern (142) changes at all times.

9. Extensometer (100) according to any one of claims 1 to 8, wherein light of a first partial region of the first region (143) of the interference fringe pattern (142) is imaged onto the first apparatus (131) for measuring an intensity of a laser beam and light of a second partial region of the first region (143) of the interference fringe pattern (142) is imaged onto the third apparatus (134) for measuring an intensity of a laser beam;

wherein a symmetrical difference volume of the first and second partial regions of the first region (143) is not empty;
wherein light of a first partial region of the second region (144) of the interference fringe pattern (142) is imaged onto the second apparatus (132) for measuring an intensity of a laser beam and light of a region (144) of the interference fringe pattern (142) is imaged onto the fourth apparatus (136) for measuring an intensity of the laser beam,
wherein a symmetrical difference volume of the first and second partial regions of the second region (143) is not empty.

**Revendications**

1. Capteur de contrainte optique sans contact (100) présentant :

   une source de faisceau laser (110) pour générer un premier faisceau laser (120) et un deuxième faisceau laser (121) ;
   un premier dispositif (130) et un deuxième dispositif (131) de mesure d'une intensité d'un faisceau laser ;
   le capteur de contrainte optique sans contact (100) étant configuré et adapté de telle sorte
   que le premier faisceau laser (120) et le deuxième faisceau laser (121) sont mis en interférence l'un avec l'autre sur une surface (141) d'un objet à mesurer (140) selon un angle (θ), moyennant quoi un motif de franges d'interférence (142) est produit sur la surface (141) de l'objet à mesurer (140) ;
   qu'une première zone (143) du motif de franges d'interférence (142) est représentée sur le premier dispositif (131) de mesure d'une intensité d'un faisceau laser et une deuxième zone (144) du motif de franges d'interférence (142) est représentée sur le deuxième dispositif (132) de mesure d'une intensité d'un faisceau laser, la première zone (143) et la deuxième zone (144) étant disjointes ; **caractérisé en ce que** le capteur de contrainte présente un dispositif d'évaluation qui est adapté pour évaluer différentiellement un signal du premier dispositif (131) de mesure d'une intensité d'un faisceau laser et un signal du deuxième dispositif (132) de mesure d'une intensité d'un faisceau laser en termes de fréquence et/ou de phase,
   le capteur de contrainte présentant en outre :

   un troisième dispositif (134) de mesure d'une intensité d'un faisceau laser ;
   un premier diviseur de faisceau polarisant (135) qui est agencé avant le premier dispositif (131) de mesure d'une intensité d'un faisceau laser,
   la lumière d'une première polarisation provenant de la première zone (143) du motif de franges d'interférence (142) étant représentée sur le premier dispositif (131) de mesure d'une intensité d'un faisceau laser et la lumière d'une deuxième polarisation provenant de la première zone (143) du motif de franges d'interférence (142) étant représentée sur le troisième dispositif (134) de mesure d'une intensité d'un faisceau laser ;
   un quatrième dispositif (136) de mesure d'une intensité d'un faisceau laser ; et
   un deuxième diviseur de faisceau polarisant (137) qui est agencé avant le deuxième dispositif (132) de mesure d'une intensité d'un faisceau laser,
   la lumière d'une première polarisation provenant de la deuxième zone (144) du motif de franges d'interférence (142) étant représentée sur le deuxième dispositif (132) de mesure d'une intensité d'un faisceau laser et la lumière d'une deuxième polarisation provenant de la deuxième zone (144) du motif de franges d'interférence (142) étant représentée sur le quatrième dispositif (136) de mesure d'une intensité d'un faisceau laser.

2. Capteur de contrainte (100) selon la revendication 1,
   **caractérisé en ce que**
   la source de faisceau laser (110) présente :

   un seul laser (111) ;
   un dispositif de division de faisceau (112) ; et
   un dispositif (113) de décalage de fréquence du rayonnement émis par le laser (111) ;
   **en ce qu'**un faisceau laser du laser (111) est divisé en le premier faisceau laser (120) et le deuxième faisceau laser (121) à l'aide du dispositif de division de faisceau (112) ; et
   **en ce que** la fréquence du premier faisceau laser (121) ou du deuxième faisceau laser (122) est décalée à l'aide du dispositif (113) de décalage de fréquence.

3. Capteur de contrainte (100) selon la revendication 1,
   **caractérisé en ce que**
   la source de faisceau laser (110) présente :

   un premier laser (111) ; et
   un deuxième laser qui est décalé en fréquence par rapport au premier laser (111) et synchronisé en phase avec le premier laser (111) à l'aide d'un dispositif de synchronisation de phase.

**4.** Capteur de contrainte (100) selon l'une quelconque des revendications précédentes, **caractérisé en ce que** le signal du premier dispositif (131) de mesure d'une intensité d'un faisceau laser et le signal du deuxième dispositif (132) de mesure d'une intensité d'un faisceau laser, ou une différence entre le signal du premier dispositif (131) de mesure d'une intensité d'un faisceau laser et le signal du deuxième dispositif (132) de mesure d'une intensité d'un faisceau laser, sont démodulés en fréquence ou en phase au moyen d'un démodulateur (160).

**5.** Capteur de contrainte (100) selon l'une quelconque des revendications précédentes, **caractérisé en ce que** la longueur d'onde laser utilisée est comprise entre 1 500 et 1 600 nm.

**6.** Capteur de contrainte (100) selon l'une quelconque des revendications précédentes, **caractérisé en ce que** une somme d'une surface de la première zone (143) du motif de franges d'interférence (142) et d'une surface de la deuxième zone (144) du motif de franges d'interférence (142) est supérieure à 0,5 % de la surface du motif de franges d'interférence sur l'objet à mesurer.

**7.** Capteur de contrainte (100) selon l'une quelconque des revendications précédentes, présentant en outre :
au moins un élément holographique pour générer le premier faisceau laser (120) et/ou le deuxième faisceau laser (121) respectivement dans un double mode transversal (146) .

**8.** Capteur de contrainte (100) selon l'une quelconque des revendications précédentes, **caractérisé en ce que** la fréquence du premier faisceau laser (120) est décalée en permanence par rapport à la fréquence du deuxième faisceau laser (121) à l'aide d'un dispositif de décalage de fréquence, de telle sorte que le motif de franges d'interférence (142) change à tout moment.

**9.** Capteur de contrainte (100) selon l'une quelconque des revendications 1 à 8,

la lumière d'une première zone partielle de la première zone (143) du motif de franges d'interférence (142) étant représentée sur le premier dispositif (131) de mesure d'une intensité d'un faisceau laser et la lumière d'une deuxième zone partielle de la première zone (143) du motif de franges d'interférence (142) étant représentée sur le troisième dispositif (134) de mesure d'une intensité d'un faisceau laser ;
une quantité différentielle symétrique de la première et de la deuxième zone partielle de la première zone (143) n'étant pas vide ;
la lumière d'une première zone partielle de la deuxième zone (144) du motif de franges d'interférence (142) étant représentée sur le deuxième dispositif (132) de mesure d'une intensité d'un faisceau laser et la lumière d'une deuxième zone (144) du motif de franges d'interférence (142) étant représentée sur le quatrième dispositif (136) de mesure d'une intensité d'un faisceau laser,
une quantité différentielle symétrique de la première et de la deuxième zone partielle de la deuxième zone (143) n'étant pas vide.

Fig. 1

Fig. 2

Fig. 3

EP 3 794 309 B1

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0851210 B1
- DE 102012211549 B3
- DE 102014216278 A1
- EP 2589924 A1
- US 4436419 A
- WO 2017015424 A1

**In der Beschreibung aufgeführte Nicht-Patentliteratur**

- Measuring MEMS in motion by laser doppler vibrometry. **CHRISTIAN REMBE.** Optical inspection of microsystems. taylor & Francis, 2007, S245-292
- **C. EXNER.** In-Plane Laser-Doppler-Velocimeter Sensor Head for the Measurement of Surface Structural Intensity. *Acta Acustica united with Acustica,* November 1998, vol. 84 (6), 1055-1065
- **JU-YI LEE.** Measurement of in-plane displacement by wavelength-modulated heterodyne speckle interferometry. *Applied Optics,* 2012, vol. 51 (8), 1095-1100
- **C. EXNER ; M. GRÖSCHL ; S. RADE ; C. FOCKE ; E. BENES.** *In-Plane Laser-Doppler-Velocimeter Sensor Head for the Measurement of Surface Structural Intensity*
- **K. MARU ; S KATSUMI ; R. MATSUDA.** *Nonmechanical compact probe for cross-sectional velocity measurement based on differential laser Doppler velocimetry*
- **A.T.WAZ ; G DUDZIK ; P.R. KACZMAREK ; K.M ABRAMSKI.** *Multichannel WDM vibrometry at 1550nm*
- Measuring MEMS in Motion by Laser Doppler Vibrometry. **STEGER, HEINRICH ; WÖRTGE, MICHAEL ; SIEGMUND, GEORG ; REMBE, C.** Optical Inspection of Microsystems. Verlag CRC Press, 2006, 245-292